# EUROPÄISCHE PATENTANMELDUNG

(11) **EP 4 553 038 A1**
(43) Veröffentlichungstag der Anmeldung: **14.05.2025**
(21) Anmeldenummer: 23020499.2
(22) Anmeldetag: 09.11.2023
(51) Int. Cl.: C01B 3/34, C01B 3/50

(54) **VERFAHREN UND ANLAGE ZUR HERSTELLUNG VON WASSERSTOFF**

(71) Anmelder: Linde GmbH, 82049 Pullach (DE)
(72) Erfinder: Seliger, Andreas, 82049 Pullach (DE); Fruhmann, Christian, 82049 Pullach (DE); Müller-Thorwart, Ole, 82049 Pullach (DE); Lemme, Volkmar, 82049 Pullach (DE)
(74) Vertreter: Fischer, Werner

(57) **Zusammenfassung**

Es wird ein Verfahren (100) zur Herstellung von Wasserstoff (2) aus einem kohlenstoffhaltigen Eduktstrom (1) vorgeschlagen, wobei der Eduktstrom (1) unter Verwendung einer autothermen Reaktion, einer partiellen Oxidation, einer Dampfreformierung (130) und einer Wasser-Gas-Shift-Reaktion (140) zu einem zumindest Wasserstoff und Kohlenstoffdioxid enthaltenden Rohprodukt (14) einer Umsetzung unterworfen wird, wobei das Kohlenstoffdioxid (3) zumindest teilweise aus dem Rohprodukt (14) abgetrennt (150) wird und das Wasserstoffrohprodukt (15) stromab der Abtrennung (150) des Kohlenstoffdioxids (3) unter Erhalt eines Wasserstoffprodukts (2) und eines Spülgasstroms (16) einer Aufreinigung (160) unterworfen wird, dadurch gekennzeichnet, dass zumindest ein Teil einer im Rahmen der Umsetzung (130) erforderlichen Aktivierungsenergie durch eine elektrisch betriebene Beheizung (120) des Eduktstroms (1) aufgebracht wird. Ferner wird eine Anlage zur Durchführung eines derartigen Verfahrens vorgeschlagen.

## Beschreibung

Die Erfindung betrifft ein Verfahren und eine Anlage zur Herstellung von Wasserstoff

### Hintergrund

Herkömmliche großtechnische Anlagen zur Erzeugung von Wasserstoff können aus kohlenwasserstoffhaltigen Eduktströmen, beispielsweise aus Erdgas, unter Verwendung einer autothermen Reformierung, einer Dampfreformierung und/oder einer partiellen Oxidation, insbesondere kombiniert mit einer Wasser-Gas-Shift-Reaktion, Wasserstoff erzeugen. Wird das dabei gebildete Kohlenstoffdioxid abgetrennt und stofflich genutzt oder dauerhaft endgelagert (typischerweise in verdichteter, insbesondere in verflüssigter Form), was auch als Sequestrierung bezeichnet wird, so spricht man auch von "blauem Wasserstoff", Im Vergleich zu Verfahren ohne derartige Abtrennung des Kohlenstoffdioxids weist die Herstellung von blauem Wasserstoff einen deutlich kleineren Ausstoß an klimaaktiven Gasen in die Erdatmosphäre auf.

Typischerweise wird Wasserstoff (unabhängig von der konkret verwendeten Herstellungsmethode) stromab der eigentlichen Herstellung einer Aufreinigung unterworfen, beispielsweise unter Verwendung eines Adsorptionsverfahrens, wobei ein dazu verwendeter Adsorber in der Regel zyklisch regeneriert werden muss. Bei derartigen Regenerationen anfallendes, kohlenstoffhaltiges Spülgas wird in herkömmlichen Verfahren verbrannt, wobei die dabei die erzeugte Wärme typischerweise verfahrensintern verwendet wird. Die Verbrennung des Spülgases verursacht jedoch wiederum Emissionen von Kohlenstoffdioxid in die Atmosphäre. Eine Abtrennung und Sequestrierung von Kohlenstoffdioxid aus dem (heißen, drucklosen) Verbrennungsabgas ist deutlich aufwendiger als die Abtrennung und Sequestrierung aus dem (kalten, unter Druck stehenden) (Roh-)Produktgas.

Es besteht daher der Bedarf nach Lösungen, bei denen die Nachteile von herkömmlichen Vorgehensweisen zumindest teilweise überwunden werden.

### Übersicht

Vor diesem Hintergrund werden ein Verfahren und eine Anlage mit den Merkmalen der jeweiligen unabhängigen Patentansprüche vorgeschlagen. Vorteilhafte Weiterbildungen und weitere Ausgestaltungen sind Gegenstand der Unteransprüche sowie der nachfolgenden Beschreibung.

Das vorgeschlagene Verfahren bedient sich insbesondere der Maßnahme, einen bei der Aufreinigung des Wasserstoffs anfallenden Spülgasstrom nicht vollständig zu verbrennen, sondern zumindest teilweise in das Verfahren zurückzuführen, um die Wasserstoffausbeute zu erhöhen. Im Vergleich zu herkömmlichen Verfahren fehlt dabei jedoch eine erhebliche Wärmemenge, die zum Beheizen des verwendeten Eduktstroms erforderlich ist, um die Aktivierungsenergie für die Umsetzung des Eduktstroms zu dem Wasserstoffprodukt aufzubringen. Daher wird vorgeschlagen, die Beheizung des Eduktstroms und/oder eines weiteren dem Verfahren zugeführten Stoffstroms (z.B. Sauerstoff und/oder Dampf) zumindest teilweise elektrisch, vorzugsweise unter Verwendung von regenerativ erzeugter elektrischer Energie, insbesondere gemäß der unten getroffenen Definition, vorzunehmen.

Im Einzelnen wird ein Verfahren zur Herstellung von Wasserstoff aus einem kohlenstoffhaltigen Eduktstrom vorgeschlagen, wobei der Eduktstrom unter Verwendung einer autothermen Reaktion, einer partiellen Oxidation, einer Dampfreformierung und/oder einer Wasser-Gas-Shift-Reaktion zu einem zumindest Wasserstoff und Kohlenstoffdioxid enthaltenden Rohprodukt einer Umsetzung unterworfen wird, wobei das Kohlenstoffdioxid zumindest teilweise aus dem Rohprodukt abgetrennt wird, und wobei das Rohprodukt stromab der Abtrennung des Kohlenstoffdioxids unter Erhalt eines Wasserstoffprodukts und eines Spülgasstroms einer Aufreinigung unterworfen wird.

Im Rahmen des vorgeschlagenen Verfahrens wird zumindest ein Teil einer im Rahmen der Umsetzung erforderlichen Aktivierungsenergie durch eine elektrisch betriebene Beheizung des Eduktstroms aufgebracht.

In zumindest einer Ausgestaltung wird die elektrisch betriebene Beheizung zumindest teilweise mit aus erneuerbaren Stromquellen gewonnener elektrischer Energie betrieben, was die Gesamtemissionen weiter senkt.

In wenigstens einer Ausgestaltung wird der Spülgasstrom zumindest teilweise stromauf der Aufreinigung in den Rohproduktstrom und/oder den Eduktstrom zurückgeführt, um die Ausbeute an Wasserstoff zu erhöhen.

In zumindest einer Ausgestaltung wird ein Teil des Spülgasstroms, insbesondere weniger als 50%, 30% oder weniger als 10% einer Gesamtmenge des in der Aufreinigung erhaltenenen Spülgasstroms, verbrannt, wobei bei der Verbrennung entstehende Wärme zumindest teilweise zur zusätzlichen Beheizung des Eduktstroms verwendet wird. Die Verbrennung eines (insbesondere kleinen) Anteils des Spülgasstroms dient der Entfernung von Verunreinigungen, beispielsweise Inertgaskomponenten, aus dem System, die sich andernfalls immer weiter aufkonzentrieren würden. Dabei kann die bei der Verbrennung entstehende Wärme verfahrensintern genutzt werden, um die Effizienz des Verfahrens zu erhöhen.

In wenigstens einer Ausgestaltung wird das abgetrennte Kohlenstoffdioxid zumindest teilweise verflüssigt und sequestriert oder stofflich genutzt, wodurch ein Einfluss der Wasserstoffproduktion auf das Klima minimiert werden kann.

Die vorgeschlagene Anlage zur Herstellung von Wasserstoff weist einen Reaktor, der zur Umsetzung eines kohlenstoffhaltigen Eduktstroms zu einem zumindest Wasserstoff und Kohlenstoffdioxid enthaltenden Rohproduktstrom eingerichtet ist, eine Kohlenstoffdioxid-Abtrennvorrichtung stromab des Reaktors und eine elektrisch betreibbare Heizvorrichtung stromauf des Reaktors auf und ist zur Durchführung eines wie zuvor beschriebenen Verfahrens in irgendeiner Ausgestaltung eingerichtet. Somit profitiert die Anlage von den in Bezug auf Ausgestaltungen des erfindungsgemäßen Verfahrens beschriebenen Vorteilen in sinngemäß entsprechender Weise.

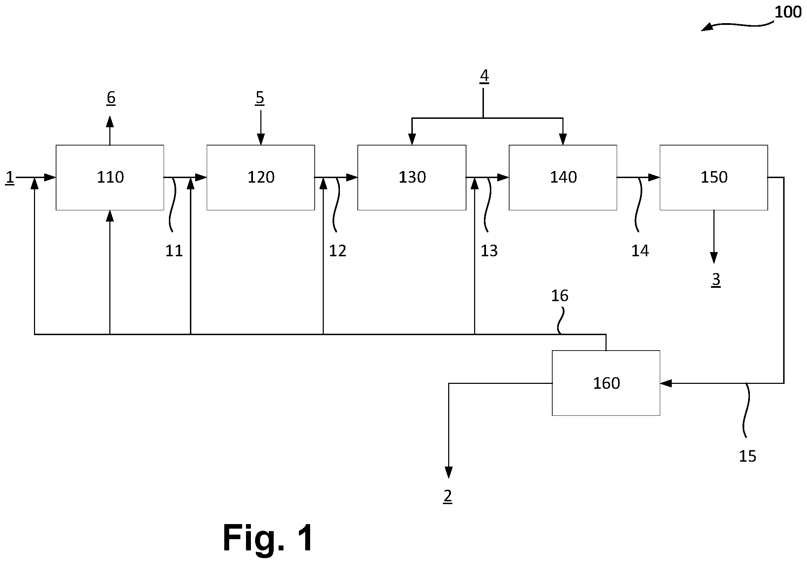

Im Folgenden werden weitere Aspekte und Vorteile der Erfindung unter Bezugnahme auf ein in der Figur 1 schematisch dargestelltes Ausführungsbeispiel erläutert. Dabei zeigt Figur 1 eine Ausgestaltung der Erfindung in Form eines vereinfachten Blockdigramms.

### Ausgestaltungen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich Beispiele dar und sollen hinsichtlich der Merkmale der Erfindung nicht abschließend und/oder beschränkend verstanden werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er, wie zuvor erwähnt, in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Verfahren zur Herstellung von Wasserstoff, die im Zusammenhang mit der vorliegenden Erfindung zum Einsatz kommen können, sind vielfach in der Literatur beschrieben. Statt vieler sei in diesem Zusammenhang beispielsweise auf den Artikel von A.O. Oni et al., "Comparative assessment of blue hydrogen from steam methane reforming, autothermal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt.

Die Herstellung von Wasserstoff mittels Wasserelektrolyse ist ebenfalls hinreichend bekannt und beispielsweise in dem Artikel "Hydrogen" in Ullmann`s Encyclopedia of Industrial Chemistry, Wiley-VCH, 15. Juni 2000, DOI: 10.1002/14356007.a13_297, insbesondere in Abschnitt 4.2, "Electrolysis", beschrieben.

Bei der klassischen Wasserelektrolyse wird eine wässrige alkalische Lösung, typischerweise von Kaliumhydroxid, als Elektrolyt verwendet (AEL, Alkalische Elektrolyse). Die Elektrolyse mit einer uni- oder bipolaren Elektrodenanordnung erfolgt dabei bei Atmosphärendruck oder im industriellen Maßstab auch deutlich darüber. Neuere Entwicklungen bei der Wasserelektrolyse umfassen die Verwendung von protonenleitenden lonenaustauschmembranen (SPE, Solid Polymer Electrolysis; PEM, Proton Exchange Membranes), bei der das zu elektrolysierende Wasser an der Anodenseite bereitgestellt wird. Auch die Elektrolyse unter Verwendung von Anionenaustauschermembranen (AEM, Anion Exchange Membrane) ist bekannt.

Die bisher genannten Verfahren der Wasserelektrolyse zählen zu den Niedertemperaturverfahren, bei denen das zu elektrolysierende Wasser in der Flüssigphase vorliegt. Daneben wird auch die sogenannte Dampfelektrolyse eingesetzt, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) durchgeführt werden können. Letztere umfassen insbesondere dotiertes Zirkondioxid oder Oxide anderer seltener Erden, die bei mehr hohen Temperaturen leitfähig werden.

Der Begriff der Elektrolyse soll nachfolgend sämtliche dieser Verfahren umfassen. Insbesondere die Niedertemperaturelektrolyse (PEM, AEL, AEM) eignet sich für einen flexiblen Betrieb, der den Energieübergang zu erneuerbaren Energien unterstützt. Sämtliche Verfahren können in den hier vorgeschlagenen Verfahren und entsprechenden Ausgestaltungen eingesetzt werden.

Begriffe wie "regenerative elektrische Energie", "regeneriativer elektrischer Strom" und dergleichen sollen generell elektrische Energie bezeichnen, die im Wesentlichen unter Verwendung von erneuerbaren Energieträgern oder Energieformen wie beispielsweise Wasserkraft, Windenergie, Sonnenenergie, Gezeitenenergie und Geothermie gewonnen werden.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 1,1-fachen, 1,5-fachen, 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff") ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

In Figur 1 ist eine Ausgestaltung der Erfindung anhand eines vereinfachten Blockdiagramms schematisch dargestellt und insgesamt mit 100 bezeichnet.

Das Blockdigramm kann als Ablaufdiagramm einer Ausgestaltung eines erfindungsgemäßen Verfahrens verstanden werden. Ebenso kann es auch als Funktionsdiagramm einer entsprechend ausgestalteten erfindungsgemäßen Anlage interpretiert werden. Bezugnahmen auf einen Verfahrensschritt können sich daher, wie oben bereits mit anderen Worten erläutert, ebenso auf eine den Verfahrensschritt ausführende Anlagenkomponente beziehen und umgekehrt. Anlagenkomponenten und durch diese ausgeführte Verfahrensschritte werden mit identischen Bezugszeichen referenziert.

Im Rahmen des in Figur 1 dargestellten Verfahrens 100 wird ein kohlenstoffhaltiger Eduktstrom 1, beispielsweise Erdgas, einer elektrisch betriebenen Beheizung 120 zugeführt. Insbesondere kann die elektrische Beheizung 120 als Widerstandsheizung ausgeführt sein. Die elektrische Beheizung 120 kann insbesondere mit erneuerbar erzeugter elektrischer Energie 5 betrieben werden, beispielsweise mit Strom aus Windkraft oder Photovoltaik.

Ein derartig erwärmter Eduktstrom 12 wird dann einer chemischen Umsetzung 130 bzw. einem Reaktor 130 zugeführt, dem insbesondere zusätzlich Dampf 4 und/oder Luft bzw. Sauerstoff zugeführt wird. In der Umsetzung 130 wird der erwärmte Eduktstrom 12 zumindest teilweise zu einem Wasserstoff und Kohlenstoffmonoxid bzw. Kohlenstoffdioxid enthaltenden Reaktionsprodukt 13 umgesetzt.

Das Reaktionsprodukt 13 kann stromab der Umsetzung 130, ggf. unter weiterer Zugabe von Wasserdampf 4, einer Wasser-Gas-Shift-Reaktion 140 unterzogen werden, bei der in dem Reaktionsprodukt 13 vorhandenes Kohlenstoffmonoxid mit Wasserdampf zu Kohlenstoffdioxid und weiterem Wasserstoff umgesetzt wird. Dabei wird ein Rohprodukt 14 gebildet, das dann einer Kohlenstoffdioxidabtrennung 150 zugeführt wird, in der in dem Rohprodukt enthaltenes Kohlenstoffdioxid zumindest teilweise, insbesondere zu einem Anteil von mehr als 90%, mehr als 95% oder mehr als 98%, unter Bildung eines Kohlenstoffdioxidstroms 3 und eines an Wasserstoff angereicherten und an Kohlenstoffdioxid abgereicherten Wasserstoffrohprodukts 15 abgetrennt wird.

Der Kohlenstoffdioxidstrom 3 kann verflüssigt und sequestriert oder anderweitig weiterverwendet werden.

Das Wasserstoffrohprodukt 15 wird einer Aufreinigung 160, die insbesondere eine Adsorption, beispielsweise eine Druckwechseladsorption, eine Temperaturwechseladsorption oder eine Vakuum-Druckwechseladsorption, umfasst, zugeführt. In der Aufreinigung wird ein Wasserstoffprodukt 2 gebildet, das als Zielprodukt abgegeben werden kann und das insbesondere einen Wasserstoffgehalt von über 90%, 95%, 98%, 99% oder über 99,9% aufweisen kann.

Insbesondere im Rahmen einer Regeneration der Aufreinigung 160 wird daneben ein Spülgasstrom 16 gebildet, der zumindest zu einem ersten Anteil in den Eduktstrom 1 und/oder in den erwärmten Eduktstrom 11/12 und/oder in das Reaktionsprodukt 13 zurückgeführt wird. Ein Anteil des Spülgasstroms kann ferner einer Verbrennung 110 zugeführt werden, die insbesondere zur zusätzlichen Beheizung des Eduktstroms 1, insbesondere unmittelbar stromauf oder stromab der elektrischen Beheizung 120, dient. Dabei werden in dem Spülgasstrom 16 enthaltene Verunreinigungen, beispielsweise inerte Komponenten, über ein Verbrennungsabgas 6 aus dem Verfahren 100 ausgeschleust. Insbesondere kann ein Anteil des der Verbrennung 110 zugeführten Spülgasstroms 16 an einer Gesamtmenge des in der Aufreinigung 160 gebildeten Spülgasstroms 16 weniger als 50%, weniger als 30% oder weniger als 10% betragen. Damit wird ein Großteil des Spülgasstroms 16 tatsächlich im Rahmen des Verfahrens 100 wiederverwendet und lediglich ein untergeordneter Anteil der Verbrennung 110 zugeführt und damit dem Verfahren 100 entzogen.

## Patentansprüche

1. Verfahren (100) zur Herstellung von Wasserstoff (2) aus einem kohlenstoffhaltigen Eduktstrom (1), wobei der Eduktstrom (1) unter Verwendung einer autothermen Reaktion, einer partiellen Oxidation, einer Dampfreformierung (130) und/oder einer Wasser-Gas-Shift-Reaktion (140) zu einem zumindest Wasserstoff und Kohlenstoffdioxid enthaltenden Rohprodukt (14) einer Umsetzung unterworfen wird, wobei das Kohlenstoffdioxid (3) zumindest teilweise aus dem Rohprodukt (14) abgetrennt (150) wird und das Wasserstoffrohprodukt (15) stromab der Abtrennung (150) des Kohlenstoffdioxids (3) unter Erhalt eines Wasserstoffprodukts (2) und eines Spülgasstroms (16) einer Aufreinigung (160) unterworfen wird, **dadurch gekennzeichnet, dass** zumindest ein Teil einer im Rahmen der Umsetzung (130) erforderlichen Aktivierungsenergie durch eine elektrisch betriebene Beheizung (120) des Eduktstroms (1) und/oder eines weiteren dem Verfahren (100) zugeführten Stoffstroms (4) aufgebracht wird.

2. Verfahren (100) nach Anspruch 1, wobei die elektrisch betriebene Beheizung (120) zumindest teilweise mit aus erneuerbaren Stromquellen gewonnener elektrischer Energie (5) betrieben wird.

3. Verfahren (100) nach einem der vorstehenden Ansprüche, wobei der Spülgasstrom (16) zumindest teilweise stromauf der Aufreinigung (160) in den Rohproduktstrom (13) und/oder den Eduktstrom (1, 11, 12) zurückgeführt wird.

4. Verfahren (100) nach einem der vorstehenden Ansprüche, wobei ein Teil des Spülgasstroms (16), insbesondere weniger als 50%, 30% oder weniger als 10% einer Gesamtmenge des in der Aufreinigung (160) erhaltenenen Spülgasstroms (16), verbrannt (110) wird, wobei bei der Verbrennung (110) entstehende Wärme zumindest teilweise zur zusätzlichen Beheizung des Eduktstroms (1) und/oder des weiteren Stoffstroms (4) verwendet wird.

5. Verfahren (100) nach einem der vorstehenden Ansprüche, wobei die Abtrennung (150) des Kohlenstoffdioxids (3) unter Verwendung einer chemischen Wäsche, insbesondere einer Aminwäsche, und/oder einer physikalischen Wäsche und/oder einer Adsorption erfolgt.

6. Verfahren (100) nach einem der vorstehenden Ansprüche, wobei das abgetrennte Kohlenstoffdioxid (3) zumindest teilweise verflüssigt und sequestriert wird.

7. Anlage zur Herstellung von Wasserstoff (2) mit einem Reaktor (130), der zur Umsetzung eines kohlenstoffhaltigen Eduktstroms (1) zu einem zumindest Wasserstoff und Kohlenstoffdioxid (3) enthaltenden Rohproduktstrom (13, 14) eingerichtet ist, einer Kohlenstoffdioxid-Abtrennvorrichtung (150) stromab des Reaktors (130) und einer elektrisch betriebenen Heizvorrichtung (120) stromauf des Reaktors (130), wobei die Anlage zur Durchführung eines Verfahrens (100) nach einem der vorstehenden Ansprüche eingerichtet ist.
